# EUROPÄISCHE PATENTSCHRIFT

(11) **EP 2 792 769 B1**
(45) Veröffentlichungstag und Bekanntmachung des Hinweises auf die Patenterteilung: **13.04.2016**
(21) Anmeldenummer: 13164529.3
(22) Anmeldetag: 19.04.2013
(51) Int. Cl.: C25B 15/08, C02F 1/42, C25B 1/04, C02F 1/00, C02F 1/461

(54) **Elektrolyseur mit Ionentauscher**
Electrolyzer with ion exchanger
Electrolyseur doté d'un échangeur d'ions

(43) Veröffentlichungstag der Anmeldung: 22.10.2014
(73) Patentinhaber: H-TEC Systems GmbH, 23558 Lübeck (DE)
(72) Erfinder: Smarsch, Svetlana, 23554 Lübeck (DE); Mantai, Nils, 23560 Lübeck (DE); Bülow, Norbert, 23566 Lübeck (DE); Würfel, Claus, 23558 Lübeck (DE); Wilken, Dennis, 23847 Kastorf (DE); Küter, Uwe, 23560 Lübeck (DE); Höller, Stefan, 23552 Lübeck (DE)
(74) Vertreter: Daub, Thomas

(56) Entgegenhaltungen:
- EP-A1- 1 243 671
- US-A- 5 690 797
- US-A1- 2003 141 200

## Beschreibung

Die Erfindung betrifft ein Verfahren zum Betreiben einer Elektrolysevorrichtung gemäß den im Oberbegriff des Anspruchs 1 angegebenen Merkmalen sowie eine Elektrolysevorrichtung mit den im Oberbegriff des Anspruchs 5 angegebenen Merkmalen.

Bei Elektrolysevorrichtungen der hier in Rede stehenden Art, die mit einem Elektrolyseur mit Polymer-Elektrolyt-Membran arbeiten und zur Erzeugung von Wasserstoff dienen, zählt es zum Stand der Technik, das Wasser, insbesondere das destillierte Wasser, welches zum Betrieb des Elektrolyseurs erforderlich ist, im Kreislauf zu führen. Dabei wird das aus dem typischerweise als Stack ausgebildeten PEM-Elektrolyseur austretende Wasser, welches auf der Sauerstoffseite austritt, zunächst in einen Speicher rückgeführt und von dort wieder dem Stack zugeführt. Um die empfindliche Polymer-Elektrolyt-Membran vor Verunreinigungen zu schützen, wird das Wasser vor Eintritt in den Elektrolyseur mittels eines Ionenaustauschers von Metallionen befreit, die, wenn auch nur in kleinen Mengen, in dem aus dem Stack austretenden Wasser vorhanden sind. Da der Ionenaustauscher wärmekritisch ist und nur bis zu einer Temperatur von ca. 60 °C betrieben werden kann, wird zum einen das dem Ionenaustauscher zugeführte Wasser mittels eines Wärmetauschers gekühlt, und zum anderen in regelmäßigen Abständen warmes destilliertes Wasser abgelassen und kaltes destilliertes Wasser in den Kreislauf eingespeist. Dies führt in der Praxis dazu, dass etwa doppelt so viel destilliertes Wasser in den Kreislauf eingespeist wird, wie dies zum Betrieb des PEM-Elektrolyseurs eigentlich erforderlich wäre.

Vor diesem Hintergrund liegt der Erfindung die Aufgabe zugrunde, ein gattungsgemäßes Verfahren zum einen dahingehend zu verbessern, dass es mit einer geringeren Menge an destilliertem Wasser betrieben werden kann und zum anderen die Effektivität des Verfahrens zu steigern. Darüber hinaus soll eine Vorrichtung bereitgestellt werden, mit der dieses Verfahren ausführbar ist.

Der verfahrensmäßige Teil dieser Aufgabe wird durch ein Verfahren mit den in Anspruch 1 angegebenen Merkmalen gelöst, eine Elektrolysevorrichtung zur Ausführung dieses Verfahrens ist in Anspruch 5 angegeben. Vorteilhafte Weiterbildungen des erfindungsgemäßen Verfahrens sowie der erfindungsgemäßen Elektrolysevorrichtung sind in den Unteransprüchen und der nachfolgenden Beschreibung angegeben. Hierbei können gemäß der Erfindung die in den Unteransprüchen und der Beschreibung angegebenen Merkmale jeweils für sich aber auch in geeigneter Kombination die erfindungsgemäße Lösung gemäß Anspruch 1 bzw. 5 weiter ausgestalten.

Das erfindungsgemäße Verfahren zum Betreiben einer Elektrolysevorrichtung zur Erzeugung von Wasserstoff arbeitet mit einem Wasserkreislauf, in welchem aus dem PEM-Elektrolyseur austretendes Wasser in einer Kühlvorrichtung abgekühlt und nachfolgend in einem Ionenaustauscher zum Aufbereiten des Wassers behandelt wird, bevor es dem PEM-Elektrolyseur wieder zugeführt wird. Gemäß der Erfindung wird dem Wasser vor dem Zuleiten zur Kühlvorrichtung Wärme entzogen, wobei ein Teil dieser entzogenen Wärme dem Wasser nach dem Aufbereiten im Ionenaustauscher und vor Eintritt in den PEM-Elektrolyseur wieder zugeführt wird.

Grundgedanke des erfindungsgemäßen Verfahrens ist es, zumindest einen Teil der Wärme, die dem kreislaufgeführten Wasser vor dem Eintritt in den Ionenaustauscher entzogen wird, nach dem Austritt aus dem Ionenaustauscher und vor Eintritt in den PEM-Elektrolyseur wieder zuzuführen. Hierdurch wird die Effizienz des Verfahrens in erheblichem Maße erhöht, zum einen durch Verbesserung der Wärmebilanz, nämlich dadurch, dass ein Teil der sonst vor Eintritt in den Ionenaustauscher nutzlos abgeführten Wärme genutzt wird, um das Wasser vor Eintritt in den PEM-Elektrolyseur aufzuheizen, und zum anderen durch deutliche Verringerung der Menge des für den Prozess erforderlichen destillierten Wassers. Darüber hinaus kann durch das Aufheizen des aus dem Ionenaustauscher austretenden Wassers vor Eintritt in den PEM-Elektrolyseur die Effektivität des Elektrolyseprozesses ganz erheblich gesteigert werden, ohne hierdurch den Ionenaustauscher thermisch zu überlasten.

Grundgedanke der vorliegenden Erfindung ist es also, die Temperatur im Wasserkreislauf derart anzupassen, dass der im Wasserkreislauf nachfolgende Prozessschritt unter bestimmungsgemäßen Bedingungen stattfindet und gleichzeitig der Energieaufwand zur Temperaturanpassung gering gehalten wird. Der Ionenaustauscher arbeitet bestimmungsgemäß, wenn das Wasser im Ionenaustauscher eine Temperatur unterhalb einer Grenztemperatur aufweist. Bei den derzeit üblichen Ionenaustauschern liegt die Grenztemperatur bei etwa 60 °C. Der PEM-Elektrolyseur arbeitet am effektivsten, wenn das Wasser eine möglichst hohe Temperatur unterhalb des Siedepunktes aufweist. Bei dem derzeit technischen Stand liegt dieser Bereich zwischen etwa 70 °C und 80 °C. Eine solche Temperaturänderung wird erfindungsgemäß dadurch erreicht, dass die Wärme, welche dem abzukühlenden Wasser entzogen wird, dem Wasser, welches erwärmt werden soll, zugeführt wird.

Besonders bevorzugt wird das der Kühlvorrichtung zugeführte Wasser kanalgetrennt aber wärmeleitend und im Gegenstrom mit dem aus dem Ionenaustauscher kommenden Wasser geführt. Durch die entgegengesetzte Richtung der beiden Flüssigkeitsströme wird ein hoher Wärmeaustausch ermöglicht. Die beiden Wasserströme stehen in einer wärmeleitenden Verbindung. Beide Wasserströme sollen sich nicht vermischen, da das aus dem Ionenaustauscher austretende Wasser einen höheren Reinheitsgrad aufweist als das Wasser vor dem Zuleiten zur Kühlvorrichtung, weshalb eine Kanaltrennung vorgesehen ist.

Bevorzugt wird das Wasser dem PEM-Elektrolyseur mit einer Temperatur von mindestens 65 °C, vorzugsweise zwischen 70 °C und 80 °C zugeführt. Das Wasser muss in seiner Flüssigphase vorliegen, damit es in einem PEM-Elektrolyseur in Wasserstoff und Sauerstoff zerlegt werden kann. Von daher ist es notwendig, dass das Wasser unterhalb des Siedepunktes vorliegt. Dabei ist zu bedenken, dass der Sättigungsdampfdruck von der Temperatur und vom Druck im PEM-Elektrolyseur abhängt. Wenn das Wasser eine möglichst hohe Temperatur aufweist, sind die Wassermoleküle leichter elektrolytisch zu zerlegen. Diese erhöht die Effizienz des PEM-Elektrolyseurs.

Weiterhin vorteilhaft wird das dem Ionenaustauscher zugeleitete Wasser auf eine Temperatur von unter oder auf 60 °C abgekühlt. In dem Wasserkreislauf wird zumindest auch ein Teil des in dem PEM-Elektrolyseur verdampften Wassers, beispielsweise als Mischung von Wassermolekülen und Sauerstoff, dem Wasserkreislauf wieder zugeführt. Die Wärme des so zurückgeführten Wassers geht in den Wasserkreislauf über. Während des Betriebes kann somit die Temperatur des Wassers insgesamt angehoben werden. Daher wird vorteilhafterweise das Wasser vor Eintritt in den Ionenaustauscher zumindest auf die Temperatur abgekühlt, unterhalb derer der Ionenaustauscher effektiv arbeitet. Dies erhöht weiterhin die Effizienz der Elektrolysevorrichtung.

In der erfindungsgemäßen Elektrolysevorrichtung sind in einem Wasserkreislauf eine Kühlvorrichtung, ein Ionenaustauscher und ein PEM-Elektrolyseur nacheinander angeordnet. Im Wasserkreislauf ist erfindungsgemäß ein Wärmetauscher angeordnet, dessen eine Seite der Kühlvorrichtung vorgeschaltet und dessen andere Seite dem Ionenaustauscher nachgeschaltet ist.

Die erfindungsgemäße Vorrichtung setzt den Grundgedanken des erfindungsgemäßen Verfahrens um. Diese Umsetzung wird durch den mindestens einen Wärmetauscher technisch erreicht. Durch Einleiten des Wassers in eine Seite des Wärmetauschers vor dem Zuleiten zu der Kühlvorrichtung kann ein Teil der Wärme an das Wasser abgegeben werden, welches auf der anderen Seite des Wärmetauschers nach Austritt aus dem Ionenaustauscher geführt wird. Wärmetauscher weisen einen sehr hohen Wirkungsgrad auf. Somit kann die Wärme, welche von dem Wasser vor dem Zuleiten zur Kühlvorrichtung entzogen wird, dem Wasser nach dem Austritt aus dem Ionenaustauscher und vor Eintritt in den PEM-Elektrolyseur effizient zugeführt werden. Somit kann der gesamte Energieaufwand zum Betrieb der Vorrichtung verringert werden. Je nach Konstruktion und technischen Erfordernissen an die Elektrolysevorrichtung kann es zweckmäßig sein, dass mehr als ein Wärmetauscher eingebaut wird.

Bevorzugt weist der Wasserkreislauf mindestens einen Filter auf. Der Filter dient dem Entfernen von Teilchen und Partikeln aus dem Wasser im Wasserkreislauf, die beispielsweise die Kanäle im PEM-Elektrolyseur verstopfen oder als Katalysatorgifte die katalytischen Prozesse im PEM-Elektrolyseur beeinträchtigen könnten. Die Reinheit des Wassers wird durch den mindestens einen Filter erhöht.

Besonders bevorzugt weist der Wasserkreislauf mindestens einen ersten Filter und einen zweiten Filter auf, wobei der erste Filter im Wasserkreislauf vor dem Ionenaustauscher angeordnet ist und der zweite Filter im Wasserkreislauf vor dem PEM-Elektrolyseur angeordnet ist. Der erste Filter kann beispielsweise zum Entfernen von Katalysatorgiften dienen. Bevorzugt handelt es sich dabei um einen Aktivkohlefilter, mit dessen Hilfe die Filterung der Katalysatorgifte erfolgt. Alternativ oder ergänzend zu der Aktivkohle kann der Filter auch Katalysatorstoffe aufweisen, z. B. in Form von Beschichtungen. Die Katalysatorgifte können dabei im Filter umgewandelt oder durch Anlagerung an der Filteroberfläche zurückgehalten und somit dem Wasser entzogen werden. Der erste Filter kann so ausgelegt sein, dass die Filterwirkung durch Anlegen einer Spannung erhöht wird. Der zweite Filter ist bevorzugt als Partikelfilter ausgebildet, um Partikel aus dem Wasser zu filtern, die die Leistung des PEM-Elektrolyseurs, beispielsweise durch Verstopfen von Kanälen, vermindern könnten. Besonders vorteilhaft ist der erste Filter nicht nur vor dem Ionenaustauscher angeordnet, sondern auch vor der Kühlvorrichtung und vor dem Wärmetauscher.

Vorzugsweise ist innerhalb des Wasserkreislaufs mindestens eine Umwälzpumpe vorgesehen, die für die Umwälzung des Wassers im Kreislauf sorgt. Eine solche Umwälzpumpe ist zweckmäßigerweise in den flüssigkeitsführenden Bereichen mit Kunststoff ausgekleidet, um dem aggressiven Medium des destillierten Wassers standzuhalten. Für eine solche Umwälzpumpe ist es vorteilhaft, diese im Wasserkreislauf zwischen der Kühlvorrichtung und dem Ionenaustauscher anzuordnen, da hier das niedrigste Temperaturniveau herrscht und somit der Betrieb der Umwälzpumpe, insbesondere wenn die Fluid führenden Teile kunststoffbeschichtet sind oder aus Kunststoff bestehen, besonders günstig ist. Die Pumpe kann dann in einem Temperaturbereich von ca. 60 °C betrieben, werden, was vorteilhaft ist.

Bevorzugt weist mindestens ein Filter und/oder der Ionenaustauscher in der Elektrolysevorrichtung eine Entlüftungsvorrichtung auf. Über solche Entlüftungsvorrichtungen wird das Gas, welches sich in dem mindestens einen Filter und/oder dem Ionenaustauscher angesammelt hat, aus dem Wasserkreislauf abgeschieden.

Vorzugsweise ist in dem Wasserkreislauf der Elektrolysevorrichtung ein Speichertank vorgesehen, vorzugsweise in Fließrichtung hinter dem PEM-Elektrolyseur und vor dem Wärmetauscher. In dem Speichertank wird Wasser im Wasserkreislauf angesammelt und bei Bedarf destilliertes Wasser hinzugefügt. Dies kann den kontinuierlichen Betrieb der Elektrolysevorrichtung gewährleisten, da durch den Speichertank ein ausreichendes Volumen an Wasser vorhanden ist. Alternativ oder ergänzend zu dem Speichertank kann die Elektrolysevorrichtung auch ein entsprechend voluminös ausgelegtes Rohrsystem für den Wasserkreislauf aufweisen.

Vorteilhaft weist der Wasserkreislauf, vorzugsweise der Speichertank einen Zufluss auf, über den Wasser in den Wasserkreislauf eingespeist werden kann. In dem PEM-Elektrolyseur wird Wasser in seine Bestandteile zerlegt. Das Wasser wird somit verbraucht. Nach einer gewissen Zeit, auch bei einer Bevorratung von Wasser in einem Speichertank oder durch ein entsprechend ausgelegtes Rohrsystem nimmt die Wassermenge in dem Wasserkreislauf so weit ab, dass ein kontinuierlicher Wasserstrom nicht mehr gewährleistet wäre. Eine Einspeisung von Wasser in dem Wasserkreislauf ist somit periodisch erforderlich, um den Betrieb der Elektrolysevorrichtung dauerhaft gewährleisten zu können. Das zugeleitete Wasser ist dabei destilliert und möglichst rein.

Besonders bevorzugt weist der PEM-Elektrolyseur in der Elektrolysevorrichtung mindestens einen Eingang zur Wasserzufuhr, einen Ausgang für Wasserstoff und einen Ausgang für ein Sauerstoff-Wasser-Gemisch auf, wobei der Eingang zur Wasserzufuhr und der Ausgang für das Sauerstoff-Wasser-Gemisch Teile des Wasserkreislaufs sind. Über den Eingang am PEM-Elektrolyseur wird das Wasser in den Elektrolyseur eingeleitet. Der PEM-Elektrolyseur, in dem ein Teil der Wassermoleküle in Sauerstoff- und Wasserstoff-Ionen aufgespalten wird, wird zumindest auf der Anodenseite der protondurchlässigen Membran mit Wasser versorgt. Je nach Bauform des PEM-Elektrolyseurs kann auf der Kathodenseite der protondurchlässigen Membran, auf welcher der molekulare Wasserstoff entsteht, der PEM-Elektrolyseur mit Wasser geflutet sein oder nicht. Über den Ausgang für Sauerstoff wird somit ein Gemisch aus Wasser und Sauerstoff aus dem PEM-Elektrolyseur ausgeleitet, wobei das Wasser im Wasserkreislauf der Elektrolyseurvorrichtung verbleibt und der Sauerstoff in die Umgebung abgegeben wird. Der Ausgang für Wasserstoff kann so ausgelegt sein, dass der Wasserstoff gesammelt wird und/oder dass der Wasserstoff einer nachfolgenden Behandlung zugeleitet wird. Über den Ausgang für Wasserstoff kann auch Wasser beispielsweise in Form von Wasserdampf ausgeleitet werden, wenn der PEM-Elektrolyseur kathodenseitig mit Wasser befüllt ist. Besonders bevorzugt ist der Ausgang für das Sauerstoff-Wasser-Gemisch mit dem Speichertank leitungsverbunden. Das Gemisch aus Sauerstoff und Wasser wird somit dem Speichertank zugeleitet. Das aufgeheizte Wasser wird also einer weiteren Verwertung in der Vorrichtung zugeführt.

Vorteilhaft ist der Speichertank zur Gas-Wassertrennung ausgelegt und ein Gasabscheider vorgesehen, der den Sauerstoff aus dem Wasserkreislauf abführt. Die Elektrolysevorrichtung erzeugt somit nicht nur Wasserstoff als Endprodukt, sondern auch Sauerstoff, der gegebenenfalls auch gesammelt und/oder einem weiteren Nutzung zugleitet werden kann.

Weiterhin bevorzugt weist die Kühlvorrichtung einen Wärmetauscher auf, dessen eine Seite im Wasserkreislauf liegt und dessen andere Seite mit einem Kühlsystem leitungsverbunden ist. Das Kühlsystem kann dabei in einfachster Form durch den Anschluss des Wärmetauschers an eine Brauchwasserleitung und durch Abführen des erwärmten Brauchwassers aus dem Wärmetauscher in einen Abflusskanal umgesetzt werden. Das Kühlmedium ist hierbei das Brauchwasser. Alternativ ist es möglich, das Kühlsystem als Kühlkreislauf auszulegen, wobei das Kühlmedium beispielsweise thermoelektrisch gekühlt wird und dem Wärmetauscher zugeführt wird. Vorteilhaft ist der Wärmetauscher ein Plattenwärmetauscher. Das Kühlmedium kann im Gegenstrom kanalgetrennt zu dem Wasser des Wasserkreislaufs geführt werden. Das destillierte Wasser, welches im Wasserkreislauf durch das Kühlsystem abgekühlt werden soll, kann über den Wärmetauscher als Teil der Kühlvorrichtung die Wärme mit einem hohen Wirkungsgrad an das Kühlmedium des Kühlsystems abgeben.

Vorteilhaft ist der Wärmetauscher ein Plattenwärmetauscher in dem das dem Ionenaustauscher zugeleitete Wasser und das aus dem Ionenaustauscher kommende Wasser im Gegenstrom kanalgetrennt und wärmeleitend miteinander verbunden sind. Ein Plattenwärmetauscher ermöglicht einen sehr effizienten Austausch der Wärme zwischen den beiden Wasserströmen. Der Betrieb des Plattenwärmetauschers mit Gegenströmen der beiden Wasserströme erhöht dabei weiterhin den Wirkungsgrad des Wärmeaustauschs. Ein intensiver Austausch der Wärme zwischen den beiden Wasserströmen wird dadurch erreicht.

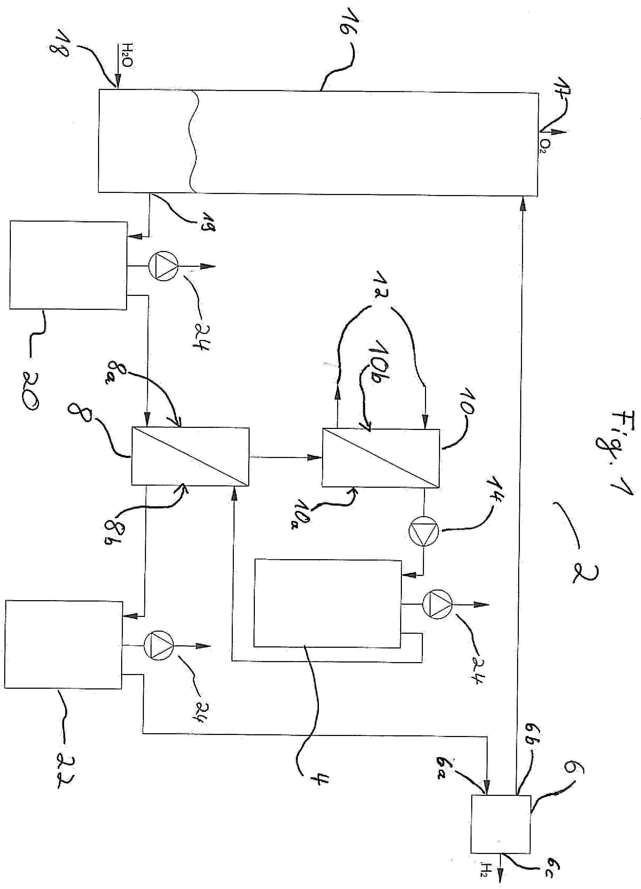

Die Erfindung ist nachfolgend anhand eines in der Zeichnung dargestellten Ausführungsbeispiels näher erläutert. Es zeigt die Figur 1 eine Prinzipdarstellung einer Elektrolysevorrichtung gemäß der Erfindung.

Eine Elektrolysevorrichtung 2 weist einen Wasserkreislauf auf, in dem in Durchströmungsrichtung nacheinander folgend ein PEM-Elektrolyseur 6, ein Speichertank 16, ein erster Wärmetauscher 8 in Form eines Plattenwärmetauschers, ein zweiter Wärmetauscher 10 und ein Ionenaustauscher 4 leitungsverbunden sind. Die erste warme Seite 8a des ersten Wärmetauschers 8 ist ausgangsseitig mit dem Eingang der ersten warmen Seite 10a des zweiten Wärmetauschers 10 leitungsverbunden. Die erste warme Seite 10b des zweiten Wärmetauschers 10 ist ausgangsseitig mit dem Ionenaustauscher 4 leitungsverbunden. Die zweite kalte Seite 8b des ersten Wärmetauschers 8 ist mit dem Ausgang des Ionenaustauschers 4 leitungsverbunden und somit diesem nachgeschaltet. Die zweite kalte Seite 8b des Wärmetauschers 8 schließt über eine Leitung des Wasserkreislaufs an einen Eingang 6a für Wasser des PEM-Elektrolyseurs 6 an.

Der PEM-Elektrolyseur besteht dabei aus mehreren Elektrolysezellen, welche als Zellstapel (als so genannter Stack) ausgebildet sind. Der PEM-Elektrolyseur 6 weist neben dem Eingang 6a für Wasser einen Ausgang 6b für ein Sauerststoff-Wasser-Gemisch und einen Ausgang 6c für Wasserstoff auf. Der Ausgang 6b für das Sauerstoff-Wasser-Gemisch ist anodenseitig im PEM-Elektrolyseur 6 angeordnet. Dieser anodenseitige Ausgang 6b ist mit dem Speichertank 16 leitungsverbunden und führt im Wasserkreislauf sowohl Wasser als auch molekularer Sauerstoff dem Speichertank 16 zu. Der Ausgang 6c für Wasserstoff des PEM-Elektrolyseurs 6 ist kathodenseitig angeordnet, über ihn wird Wasserstoff aus dem PEM-Elektrolyseur 6 abgeführt.

Der Speichertank 16 weist einen zusätzlichen Einlass 18 auf, über welchen destilliertes Wasser in den Speichertank 16 und somit in den Wasserkreislauf zugeführt werden kann. Weiterhin ist der Speichertank 16 derart ausgelegt, dass der Sauerstoff, welcher aus dem PEM-Elektrolyseur 6 als Gemisch mit Wasser (in flüssiger und/oder gasförmiger Form) dem Speichertank 16 zugeleitet wird, über einen Ausgang 17 aus dem Speichertank 16 abgeführt wird. Über einen Ausgang 19 ist der Speichertank 16 mit der ersten kalten Seite 8a des Wärmetauschers 8 im Wasserkreislauf leitungsverbunden.

Der zweite Wärmetauscher 10 ist ebenfalls ein Plattenwärmetauscher. Die zweite kalte Seite 10b des zweiten Wärmetauschers 10 ist sowohl eingangsseitig als auch ausgangsseitig mit einem Kühlwassersystem leitungsverbunden, welche Brauchwasser als Kühlmittel aufweist.

Zwischen dem Ausgang 19 des Speichertanks 16 und der ersten warmen Seite 8a des ersten Wärmetauschers 8 ist ein Filter 20 angeordnet. Weiterhin ist zwischen der zweiten kalten Seite 8b des ersten Wärmetauschers 8 und dem Eingang 6a für Wasser des PEM-Elektrolyseurs ein zweiter Filter 22 angeordnet. Im ersten Filter 20 werden unter anderem Katalysatorgifte, welche die katalytische Wirkung bspw. der in den Elektrolysezellen angeordneten Edelmetallelektroden des PEM-Elektrolyseurs 6 zumindest vermindern können, aus dem Wasser des Wasserkreislaufs herausgefiltert. Vorteilhaft weist der erste Filter 20 Aktivkohle und/oder Katalysatorstoffe auf, mit denen die Katalysatorgifte wechselwirken und somit umgewandelt werden und/oder sich an der Oberfläche der Katalysatorstoffe anlagern. Die Katalysatorgifte werden somit aus dem Wasser entfernt. So findet eine erste Aufbereitung des Wassers im Wasserkreislauf vor dem Ionenaustauscher 4 statt. Im zweiten Filter 22 werden Partikel herausgefiltert, die beispielsweise die Kanäle im Stack des PEM-Elektrolyseurs 6 verstopfen könnten. Die Reinheit des Wassers wird somit weiterhin verbessert.

Eine Umwälzpumpe 14 ist zwischen der ersten warmen Seite 10a des zweiten Wärmetauschers 10 und dem Eingang des Ionenaustauschers 4 angeordnet. Sie sorgt für die notwendige Durchströmung des Wassers durch den Wasserkreislauf. Die Pumpe 14 ist mit Kunststoff ausgekleidet.

An dem ersten Filter 20, dem zweiten Filter 22 und dem Ionenaustauscher 4 ist jeweils eine Entlüftungsvorrichtung 24 angeordnet. Die Entlüftungsvorrichtungen 24 weisen Pumpen auf. Über die Entlüftungsvorrichtungen 24 können somit Gase, welche sich in dem ersten Filter 20, im zweiten Filter 22 und/oder im Ionenaustauscher 4 angesammelt haben, abgelassen werden.

Durch die Anordnung des ersten Wärmetauschers 8 mit seiner ersten warmen Seite 8a vor dem Ionenaustauscher 4 und seiner zweiten kalten Seite 8b hinter dem Ionenaustauscher 4 kann zumindest ein Teil der Wärme von dem Wasserstrom auf der warmen Seite auf den Wasserstrom auf der kalten Seite übertragen werden. Das Wasser aus der ersten warmen Seite 8a des ersten Wärmetauschers 8 wird in dem zweiten Wärmetauscher 10 bis auf 60 °C oder darunter gekühlt, welches die obere Grenztemperatur für die effiziente Nutzung des Ionenaustauschers 4 darstellt. Durch die Rückgewinnung der Wärme von dem zu kühlenden Wasserstrom zu dem zu erwärmenden Wasserstrom im ersten Wärmetauscher 8 kann so effizient das Wasser, welches dem PEM-Elektrolyseur 6 zugeleitet wird, auf eine Temperatur erwärmt werden, bei welcher der PEM-Elektrolyseur 6 effizient arbeiten kann.

### Bezugszeichenliste

- 2: Elektrolysevorrichtung
- 4: Ionenaustauscher
- 6: PEM-Elektrolyseur
- 6a: Eingang für Wasser
- 6b: Ausgang für Sauerstoff-Wasser-Gemisch
- 6c: Ausgang für Wasserstoff
- 8: erster Wärmetauscher
- 8a: erste warme Seite von 8
- 8b: zweite kalte Seite von 8
- 10: zweiter Wärmetauscher
- 10a: erste warme Seite von 10
- 10b: zweite kalte Seite von 10
- 12: Kühlwassersystem
- 14: Pumpe
- 16: Speichertank
- 17: Ausgang
- 18: Einlass
- 19: Ausgang
- 20: erster Filter
- 22: zweiter Filter
- 24: Entlüftungsvorrichtungen

## Patentansprüche

1. Verfahren zum Betreiben einer Elektrolysevorrichtung (1) zur Erzeugung von Wasserstoff, bei welcher in einem Wasserkreislauf Wasser aus einem PEM-Elektrolyseur (6) in einer Kühlvorrichtung (10) abgekühlt und nachfolgend einem Ionenaustauscher (4) zum Aufbereiten des Wassers zugeführt wird und das Wasser nach dem Aufbereiten im Ionenaustauscher einem PEM-Elektrolyseur (6) zugeleitet wird, **dadurch gekennzeichnet, dass** dem Wasser vor dem Zuleiten zur Kühlvorrichtung (10) Wärme entzogen wird und ein Teil dieser entzogenen Wärme dem Wasser nach dem Aufbereiten im Ionenaustauscher (4) und vor Eintritt in den PEM-Elektrolyseur (6) wieder zugeführt wird.

2. Verfahren nach Anspruch 1, **dadurch gekennzeichnet, dass** das der Kühlvorrichtung (10) zugeführte Wasser kanalgetrennt und wärmeleitend im Gegenstrom mit dem aus dem Ionenaustauscher (4) kommenden Wasser geführt wird.

3. Verfahren nach einem der vorhergehenden Ansprüche, **dadurch gekennzeichnet, dass** das Wasser dem PEM-Elektrolyseur (6) mit einer Temperatur von mindestens 65 °C, vorzugsweise zwischen 70 und 80 °C, zugeführt wird.

4. Verfahren nach einem der vorhergehenden Ansprüche, **dadurch gekennzeichnet, dass** das dem Ionenaustauscher (4) zugeleitete Wasser auf eine Temperatur kleiner oder gleich 60 °C abgekühlt wird.

5. Elektrolysevorrichtung (2) mit einem Wasserkreislauf, in welchem eine Kühlvorrichtung (10), ein Ionenaustauscher (4) und ein PEM-Elektrolyseur (6) nacheinander angeordnet sind, **dadurch gekennzeichnet, dass** im Wasserkreislauf mindestens ein Wärmetauscher (8) angeordnet ist, dessen eine Seite (8a) der Kühlvorrichtung (10) vorgeschaltet und dessen andere Seite (8b) dem Ionenaustauscher (4) nachgeschaltet ist.

6. Elektrolysevorrichtung (2) nach einem der vorhergehenden Ansprüche, **dadurch gekennzeichnet, dass** der Wasserkreislauf mindestens einen Filter (20; 22) aufweist.

7. Elektrolysevorrichtung (2) nach Anspruch 6, **dadurch gekennzeichnet, dass** der Wasserkreislauf mindestens einen ersten Filter (20) und einen zweiten Filter (22) aufweist, wobei der erste Filter (20) im Wasserkreislauf vor dem Ionenaustauscher (4) angeordnet ist und der zweite Filter (22) im Wasserkreislauf vor dem PEM-Elektrolyseur (6) angeordnet ist.

8. Elektrolysevorrichtung (2) nach einem der vorhergehenden Ansprüche, **dadurch gekennzeichnet, dass** im Wasserkreislauf mindestens eine Pumpe (14) vorzugsweise zwischen der Kühlvorrichtung (10) und dem Ionenaustauscher (4) angeordnet ist.

9. Elektrolysevorrichtung (2) nach einem der vorhergehenden Ansprüche, **dadurch gekennzeichnet, dass** mindestens ein Filter (20), (22) und/oder der Ionenaustauscher (4) eine Entlüftungsvorrichtung (24) aufweist.

10. Elektrolysevorrichtung (2) nach einem der vorhergehenden Ansprüche, **dadurch gekennzeichnet, dass** in dem Wasserkreislauf ein Speichertank (16) vorzugsweise dem PEM-Elektrolyseur (6) nachgeschaltet und vor dem Wärmetauscher (8) angeordnet ist.

11. Elektrolysevorrichtung nach einem der vorhergehenden Ansprüche, **dadurch gekennzeichnet, dass** der PEM-Elektrolyseur (6) mindestens einen Eingang (6a) zur Wasserzufuhr, einen Ausgang (6c) für Wasserstoff und einen Ausgang (6b) für ein Sauerstoff-Wasser-Gemisch aufweist, wobei der Eingang (6a) zur Wasserzufuhr und der Ausgang (6b) für das Sauerstoff-Wasser-Gemisch Teile des Wasserkreislaufs sind.

12. Elektrolysevorrichtung (2) nach Anspruch 11, **dadurch gekennzeichnet, dass** der Ausgang (6b) für das Sauerstoff-Wasser-Gemisch mit dem Speichertank (16) leitungsverbunden ist.

13. Elektrolysevorrichtung (2) nach einem der vorhergehenden Ansprüche, **dadurch gekennzeichnet, dass** die Kühlvorrichtung (10) einen Wärmetauscher (10) aufweist, dessen eine Seite (10a) mit dem Wasserkreislauf leitungsverbunden ist und dessen andere Seite (10b) mit einem Kühlsystem (12) leitungsverbunden ist.

14. Elektrolysevorrichtung (2) nach einem der vorhergehenden Ansprüche, **dadurch gekennzeichnet, dass** der Wärmetauscher (8) ein Plattenwärmetauscher ist, in dem das dem Ionenaustauscher (4) zugeleitete Wasser und das aus dem Ionenaustauscher (4) kommende Wasser im Gegenstrom wärmeleitend miteinander verbunden sind.

## Claims

1. Method for operating an electrolysis device (1) for generating hydrogen, in which in a water circulation water from a PEM electrolyser (6) is cooled in a cooling device (10) and then fed to an ion exchanger (4) for treatment of the water and in which the water is conveyed to a PEM electrolyser (6) after treatment in the ion exchanger (4), **characterised in that** heat is withdrawn from the water before conveyance to the cooling device (10) and a portion of said withdrawn heat is reintroduced to the water after treatment in the ion exchanger (4) and before entry into the PEM electrolyser (6).

2. Method according to claim 1, **characterised in that** the water fed to the cooling device (10) is conveyed in counterflow with the water coming out of the ion exchanger (4) in separate channels and in a heat-conductive manner.

3. Method according to one of the preceding claims, **characterised in that** the water is fed to the PEM electrolyser (6) at a temperature of at least 65°C, preferably between 70°C and 80°C.

4. Method according to one of the preceding claims, **characterised in that** the water fed to the ion exchanger (4) is cooled down to a temperature of less than or equal to 60°C.

5. Electrolysis device (2) with a water circulation in which a cooling device (10), an ion exchanger (4) and a PEM electrolyser (6) are successively arranged, **characterised in that** at least one heat exchanger (8) is arranged in the water circulation, the one side (8a) of which is connected upstream of the cooling device (10) and the other side (8b) of which is connected downstream of the ion exchanger (4).

6. Electrolysis device (2) according to one of the preceding claims, **characterised in that** the water circulation comprises at least one filter (20; 22).

7. Electrolysis device (2) according to claim 6, **characterised in that** the water circulation comprises at least one first filter (20) and one second filter (22), the first filter (20) being arranged in the water circulation upstream of the ion exchanger (4) and the second filter (22) being arranged in the water circulation upstream of the PEM electrolyser (6).

8. Electrolysis device (2) according to one of the preceding claims, **characterised in that** at least one pump (14) is arranged in the water circulation preferably between the cooling device (10) and the ion exchanger (4).

9. Electrolysis device (2) according to one of the preceding claims, **characterised in that** at least one filter (20), (22) and/or the ion exchanger (4) comprises a deaeration device (24).

10. Electrolysis device (2) according to one of the preceding claims, **characterised in that** in the water circulation a storage tank (16) is preferably connected downstream of the PEM electrolyser (6) and upstream of the heat exchanger (8).

11. Electrolysis device (2) according to one of the preceding claims, **characterised in that** the PEM electrolyser (6) comprises at least one inlet (6a) for water feed-in, one outlet (6c) for hydrogen and one outlet (6b) for an oxygen-water mixture, wherein the inlet (6a) for water feed-in and the outlet (6b) for the oxygen-water mixture are parts of the water circulation.

12. Electrolysis device (2) according to claim 11, **characterised in that** the outlet (6b) for the oxygen-water mixture is conductively connected to the storage tank (16).

13. Electrolysis device (2) according to one of the preceding claims, **characterised in that** the cooling device (10) comprises a heat exchanger (10), the one side (10a) of which is conductively connected to the water circulation and the other side (10b) of which is conductively connected to a cooling system (12).

14. Electrolysis device (2) according to one of the preceding claims, **characterised in that** the heat exchanger (8) is a plate heat exchanger in which the water conveyed to the ion exchanger (4) and the water coming from the ion exchanger (4) are connected to each other in the counterflow in a heat-conductive manner.

## Revendications

1. Méthode pour opérer un dispositif d'électrolyse (1) en vue à générer d'hydrogène, dans lequel, dans une circulation de l'eau, de l'eau d'un électrolyseur PEM (6) est refroidie dans un apparat de refroidissement (10) et est puis alimentée à un échangeur d'ions (4) pour traitement de l'eau et après le traitement dans l'échangeur d'ions (4), l'eau est alimentée à un électrolyseur PEM (6), **caractérisée en ce que** de chaleur est retirée de l'eau antérieurement au convoyage à l'apparat de refroidissement (10) et une portion de cette chaleur retirée est ramenée à l'eau après le traitement dans l'échangeur d'ions (4) et avant de l'entrée dans l' électrolyseur PEM (6).

2. Méthode selon la revendication 1, **caractérisée en ce que** l'eau alimentée à l'apparat de refroidissement (10) est convoyée dans le contre-courant avec l'eau provenant de l'échangeur d'ions (4) à conduites séparées et de manière thermo-conductrice.

3. Méthode selon l'une quelconque des revendications précédentes, **caractérisée en ce que** l'eau est alimentée à l'électrolyseur PEM (6) avec une température d'au moins 65°C, de préférence entre 70°C et 80°C.

4. Méthode selon l'une quelconque des revendications précédentes, **caractérisée en ce que** l'eau convoyée à l'échangeur d'ions (4) est refroidie à une température inférieure ou égale à 60°C.

5. Dispositif d'électrolyse (2) avec une circulation de l'eau, dans laquelle un apparat de refroidissement (10), un échangeur d'ions (4) et un électrolyseur PEM (6) sont disposés l'un après l'autre, **caractérisé en ce qu'**au moins un échangeur thermique (8) est disposé dans la circulation de l'eau, l'un côté (8a) duquel est connecté en amont à l'apparat de refroidissement (10) et l'autre côté (8b) duquel est connecté en aval à l'échangeur d'ions (4).

6. Dispositif d'électrolyse (2) selon l'une quelconque des revendications précédentes, **caractérisé en ce que** la circulation de l'eau comporte au moins un filtre (20 ; 22).

7. Dispositif d'électrolyse (2) selon la revendication 6, **caractérisé en ce que** la circulation de l'eau comporte au moins un filtre premier (20) et un deuxième filtre (22), le filtre premier (20) étant disposé dans la circulation de l'eau en amont de l'échangeur d'ions (4) et le deuxième filtre (22) étant disposé dans la circulation de l'eau en amont de l'électrolyseur PEM (6).

8. Dispositif d'électrolyse (2) selon l'une quelconque des revendications précédentes, **caractérisé en ce qu'**au moins une pompe (14) est disposé dans la circulation de l'eau, de préférence entre l'apparat de refroidissement (10) et l'échangeur d'ions (4).

9. Dispositif d'électrolyse (2) selon l'une quelconque des revendications précédentes, **caractérisé en ce qu'**au moins un filtre (20), (22) et/ou l'échangeur d'ions (4) comporte un dispositif de désaération (24).

10. Dispositif d'électrolyse (2) selon l'une quelconque des revendications précédentes, **caractérisé en ce que** dans la circulation de l'eau un réservoir de stockage (16) est de préférence connecté en aval de l'électrolyseur PEM (6) et est disposé en amont de l'échangeur thermique (8).

11. Dispositif d'électrolyse (2) selon l'une quelconque des revendications précédentes, **caractérisé en ce que** l'électrolyseur PEM (6) comporte au moins une entrée (6a) pour l'alimentation de l'eau, une sortie (6c) pour d'hydrogène et une sortie (6b) pour une mélange d'oxygène et de l'eau, l'entrée (6a) pour l'alimentation de l'eau et la sortie (6b) pour la mélange d'oxygène et eau étant parts de la circulation de l'eau.

12. Dispositif d'électrolyse (2) selon la revendication 11, **caractérisé en ce que** la sortie (6b) pour la mélange d'oxygène et eau est connectée avec le réservoir de stockage (16) de manière conductrice.

13. Dispositif d'électrolyse (2) selon l'une quelconque des revendications précédentes, **caractérisé en ce que** l'apparat de refroidissement (10) comporte un échangeur thermique (10), l'un côté (10a) duquel est connecté avec la circulation de l'eau de manière conductrice et l'autre côté (10b) duquel est connecté avec un système de refroidissement (12) de manière conductrice.

14. Dispositif d'électrolyse (2) selon l'une quelconque des revendications précédentes, **caractérisé en ce que** l'échangeur thermique (8) est un échangeur à plaques, dans lequel l'eau convoyée à l'échangeur d'ions (4) et l'eau provenant de l'échangeur d'ions (4) sont connectées dans le contre-courant de manière thermo-conductrice.
